# EUROPÄISCHE PATENTANMELDUNG

(11) **EP 4 488 553 A1**
(43) Veröffentlichungstag der Anmeldung: **08.01.2025**
(21) Anmeldenummer: 23184029.9
(22) Anmeldetag: 07.07.2023
(51) Int. Cl.: F16K 1/36, F16K 17/04

(54) **SICHERHEITSVENTIL**

(71) Anmelder: Leser GmbH & Co. KG, 20537 Hamburg (DE)
(72) Erfinder: RAEDER, Thomas, 20537 Hamburg (DE)
(74) Vertreter: Patentanwälte Hemmer Lindfeld Frese Partnerschaft mbB

(57) **Zusammenfassung**

Die Erfindung betrifft ein Sicherheitsventil mit einem ringförmigen Ventilsitz (2) und einem durch eine Vorspannkraft (S) an dem Ventilsitz (2) in Anlage gehaltenen und entlang einer Ventillängsachse (x) beweglichen Ventilteller (4), welcher an seinem Außenumfang eine den Ventilsitz 82) umgebende Hubglocke (6) aufweist, wobei die Hubglocke (6) einen den Ventilsitz (2) umgebenden Kragen (12) aufweist, welcher sich zu der Ventillängsachse (x) in einem Winkel (a) zwischen 60° und 80° nach außen erstreckt, und dass der Kragen (12) am Außenumfang eine ringförmige, sich quer zu dem Kragen (12) erstreckende Staudruckkante (14) aufweist.

## Beschreibung

Die Erfindung betrifft ein Sicherheitsventil, d.h. ein Überdruck-Sicherheitsventil.

Sicherheitsventile werden in industriellen Anlagen eingesetzt, um in Gas, Dampf und/oder Flüssigkeit führenden Systemen bei einem vorbestimmten Druck zu öffnen und das im System befindliche Medium zum Druckabbau entweder in die Umgebung oder gezielt abzuleiten. In der Regel weisen die Sicherheitsventile dazu ein durch eine Feder vorgespanntes Ventilelement auf, welches bei Überschreiten der Federkraft öffnet. Die Gestaltung des Ventils soll ein zuverlässiges Öffnen bei einem durch die Vorspannung definierten Druck ermöglichen und einen schnellen Druckabbau im System sicherstellen.

Es ist Aufgabe der Erfindung, ein Sicherheitsventil dahingehend zu verbessern, dass das Ventil bei verschiedenen Medien, insbesondere bei Gasen, auch bei Gegendruck und Druckverlusten in der Zuleitung zuverlässig öffnet.

Diese Aufgabe wird gelöst durch ein Sicherheitsventil mit den in Anspruch 1 angegebenen Merkmalen. Bevorzugte Ausführungsformen ergeben sich aus den Unteransprüchen, der nachfolgenden Beschreibung sowie den beigefügten Figuren.

Das erfindungsgemäße Sicherheitsventil weist wie bekannte Sicherheitsventile einen ringförmigen Ventilsitz und einen Ventilteller auf, welcher an dem Ventilsitz dichtend in Anlage treten kann. Der Ventilteller ist mit einer Vorspannkraft beaufschlagt, welche den Ventilteller an dem Ventilsitz in Anlage hält. Die auf den Ventilteller wirkende Vorspannkraft wird vorzugsweise durch eine Feder erzeugt. Dies entspricht der üblichen Ausgestaltung von Sicherheitsventilen. Der Ventilteller ist beweglich angeordnet, sodass er sich gegen die Vorspannkraft, d.h. unter Überwindung der Vorspannkraft, von dem Ventilsitz anheben kann und das Ventil öffnen kann. Am Außenumfang des Ventiltellers ist eine Hubglocke ausgebildet, welche den Ventilsitz übergreift und welche beim Öffnen die Öffnungsbewegung unterstützt und dafür Sorge trägt, dass das Ventil zum Druckabbau geöffnet bleibt.

Erfindungsgemäß ist die Hubglocke so ausgebildet, dass sie einen den Ventilsitz am Außenumfang umgebenden Kragen aufweist. Der Kragen erstreckt sich dabei quer zu einer Ventillängsachse, wobei die Ventillängsachse diejenige Achse ist, entlang derer sich der Ventilteller zum Öffnen bewegt. Der Kragen erstreckt sich erfindungsgemäß nicht normal zu der Ventillängsachse, sondern in einem Winkel von 60° bis 80° zu der Längsachse, d.h. in einem spitzen Winkel zwischen 10° und 30° zum Radius nach außen. Dabei ist der Kragen zur Ventillängsachse so geneigt, dass er an seinem Außenumfang weiter in Richtung der Ventillängsachse von dem Ventilteller beabstandet ist als an seinem Innenumfang. Der Kragen weist ferner an seinem Außenumfang eine ringförmige, sich quer zu dem Kragen erstreckende äußere Staudrucckante auf, welche sich ausgehend von dem Kragen in Richtung der Ventillängsachse weiter von dem Ventilteller wegerstreckt. Dadurch wird eine Hubglockengestalt geschaffen, welche den Ventilsitz umfänglich umgibt und in ihrem Inneren ausgehend von dem Ventilteller eine schräge Strömungsführung realisiert. Der gewählte Winkel zwischen 60° und 80° hat sich in Zusammenwirkung mit der Staudruckkante insofern als besonders vorteilhaft herausgestellt, dass sich beim Öffnen des Ventils unter der Hubglocke ein ausreichender Staudruck ausbildet, um die Öffnungsbewegung des Ventiltellers zu unterstützen. Dies ist insbesondere dann von Vorteil, wenn das Sicherheitsventil in einem gas- oder dampfführenden System zum Einsatz kommt. Durch die schräge Gestalt des Kragens wird gleichzeitig erreicht, dass die auf die Rückseite der Hubglocke wirkende Kraft, welche der Öffnungsbewegung entgegenwirken würde, verringert wird. Ferner führt die schräge Gestaltung des Kragens zu einer Beruhigung der Strömung unterhalb des Kragens und innerhalb der Staudruckkante, sodass sich dort der gewünschte Staudruck ausbilden kann.

Die Staudruckkante erstreckt sich bevorzugt im Wesentlichen parallel und weiter bevorzugt konzentrisch zu der Ventillängsachse. So bildet die Staudruckkante am Außenumfang des Kragens einen zylindrischen Rand, welcher den Ventilsitz umgibt. Die Staudruckkante trägt dazu bei, dass die Strömung unter der Hubglocke beruhigt wird und dort einen ausreichenden Staudruck aufbauen kann.

Bevorzugt umgibt die Staudruckkante zumindest im geschlossenen Zustand des Ventils den Ventilsitz radial beabstandet, sodass zwischen dem Ventilsitz bzw. einer den Ventilsitz aufweisenden Wandung und der Staudruckkante ein ausreichender Freiraum geschaffen wird, in dem sich der Staudruck aufbauen kann, welcher dann auf den Kragen in Richtung der Längsachse wirkt und die Öffnungsbewegung des Ventils unterstützt. Beim Öffnen des Sicherheitsventils, d.h. wenn der Ventilteller von dem Ventilsitz abhebt, befindet sich bevorzugt zumindest in einem ersten Abschnitt des Öffnungsweges die Staudruckkante weiter im Umgangsbereich des Ventilsitzes, d.h. überlappt den Ventilsitz außenumfänglich.

Der Kragen und die Staudruckkante können in einer möglichen Ausgestaltung ferner so dimensioniert sein, dass im geöffneten Zustand des Sicherheitsventils ein freies Ende der Staudruckkante, d.h. das dem Kragen entgegengesetzte Axialende der Staudruckkante von dem Ventilsitz axial in Richtung der Ventillängsachse beabstandet ist. In diesem Zustand überlappt bzw. übergreift die Staudruckkante den Ventilsitz nicht mehr und die Strömung kann in radialer Richtung zwischen Staudruckkante und Ventilsitz austreten.

Die Hubglocke ist am Außenumfang des Ventiltellers fixiert, vorzugsweise form- und/oder kraftschlüssig fixiert. Hierzu kann zwischen dem Außenumfang des Ventiltellers und der Hubglocke ein Fixierring angeordnet sein, welcher mit dem Ventilteller und der Hubglocke kraft- und/oder formschlüssig in Eingriff ist. Die Hubglocke weist vorzugsweise eine Zylinderwandung auf, welche den Außenumfang des Ventiltellers umgibt und in diesen Bereich an dem Ventilteller fixiert ist. Es wäre jedoch auch eine andere Befestigung der Hubglocke an dem Ventilteller denkbar. Auch eine einstückige Ausgestaltung wäre möglich. Es wäre auch denkbar, dass die Hubglocke einen geschlossenen Boden aufweist, an welchem der Ventilteller angeordnet ist.

Gemäß einer weiteren zweckmäßigen Ausgestaltung der Erfindung weist die Hubglocke einen ersten Ringabschnitt auf, welcher sich ausgehend von dem Ventilteller erstreckt. Dieser Ringabschnitt kann von der zuvor beschriebenen Zylinderwandung gebildet werden und gleichzeitig den Außenumfang des Ventiltellers umgreifen sowie sich in axialer Richtung parallel zur Ventillängsachse über den Ventilteller hinauserstrecken. Der Kragen erstreckt sich vorzugsweise ausgehend von dem Axialende dieses ersten ringförmigen Abschnittes, welches in Richtung der Ventillängsachse beabstandet von dem Ventilteller ist. So ist der Kragen insgesamt axial versetzt zu dem Ventilteller angeordnet. Direkt angrenzend an dem Ventilteller bildet der erste Ringabschnitt einen zylindrischen Wandabschnitt, welcher ein direktes radiales Wegströmen des Mediums beim Öffnen des Ventils verhindert.

Der erste Ringabschnitt erstreckt sich vorzugsweise parallel und weiter bevorzugt konzentrisch zu der Ventillängsachse. Der erste Ringabschnitt grenzt dabei bevorzugt im Wesentlichen direkt an denjenigen Flächenabschnitt des Ventiltellers an, welcher mit dem Ventilsitz in Anlage kommt.

Der erste Ringabschnitt umgibt den Ventilsitz außenumfänglich, wobei der erste Ringabschnitt von der Außenumfangskante des Ventilsitzes radial beabstandet sein kann, sodass zwischen Ventilsitz und erstem Ringabschnitt ein radialer Freiraum gebildet ist. Dieser ist jedoch vorzugsweise klein ausgebildet, um im ersten Teil der Öffnungsbewegung des Ventils einen ausreichenden Druck aufrechtzuerhalten, welcher zum vollständigen Öffnen des Ventils führt.

Weiter bevorzugt ist der erste Ringabschnitt derart dimensioniert, dass im vollständig geöffneten Zustand des Sicherheitsventils das an dem Kragen angrenzende Axialende des Ringabschnitts in Richtung der Ventillängsachse von dem Ventilsitz beabstandet ist. D.h. im geöffneten Zustand umgibt der erste Ringabschnitt den Ventilsitz nicht mehr, sondern ist von diesem axial beabstandet. Im vollständig geöffneten Zustand ist der Ventilsitz dann im Umfangsbereich vorzugsweise lediglich von der Staudruckkante und/oder dem Kragen umgeben.

In einer weiteren bevorzugten Ausgestaltung ist der Kragen in seiner Erstreckungsrichtung nach außen zumindest an seiner dem Ventilsitz zugewandten Unterseite gerade bzw. plan ausgebildet, d.h. ohne Krümmung ausgebildet. Hierdurch wird eine gute Strömungsführung erreicht. Der Kragen hat somit bevorzugt eine im Wesentlichen konische Gestalt.

Die Staudruckkante schließt sich bevorzugt gewinkelt an den Kragen an, d.h. es gibt bevorzugt im Wesentlichen keinen gekrümmten Bereich zwischen Staudruckkante und Kragen. Entsprechend kann sich der Kragen gewinkelt an den ersten Ringabschnitt anschließen, sodass auch dort im Wesentlichen keine Krümmung vorgesehen ist.

Die Hubglocke ist vorzugsweise von einer geschlossenen Wandung gebildet, d.h. sie weist bevorzugt lediglich am Innenumfang der Staudruckkante, d.h. zwischen der Staudruckkante und dem Ventilsitz eine Öffnung auf, jedoch nicht radial nach außen oder an der dem Ventilsitz abgewandten Seite. So wird eine geschlossene Fläche geschaffen, unter der sich ein Staudruck ausbilden kann. Die Hubglocke bestehend aus der Staudruckkante, dem Kragen und bevorzugt dem ersten Ringabschnitt kann als einstückiges Bauteil gefertigt sein. Alternativ kann die Hubglocke aus mehreren Elementen zusammengesetzt sein, beispielsweise aus miteinander verschweißten Elementen.

Nachfolgend wird die Erfindung beispielhaft anhand der beigefügten Figuren beschrieben. In diesen zeigt:
- Figur 1: schematisch einen Querschnitt durch die Anordnung von Ventilsitz und Ventilteller im geschlossenen Zustand und
- Figur 2: die Anordnung gemäß Figur 1 im geöffneten Zustand.

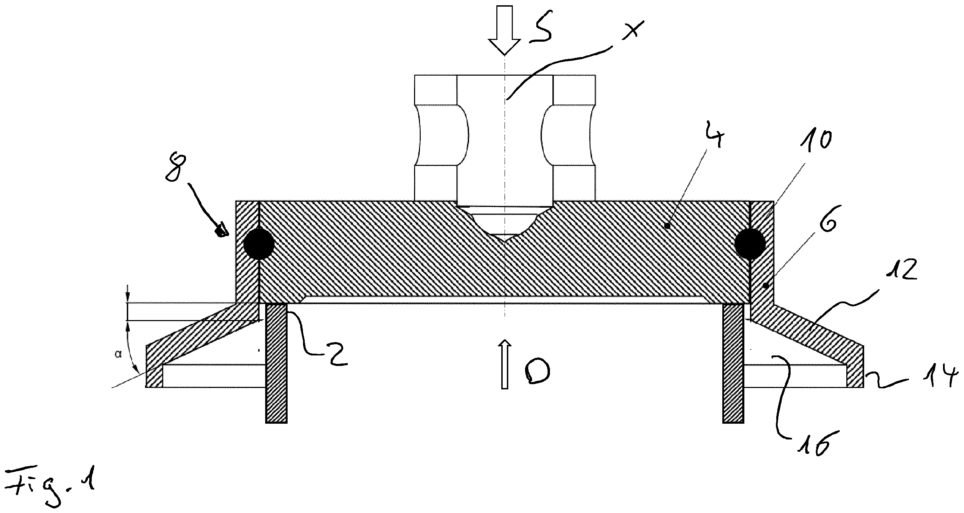

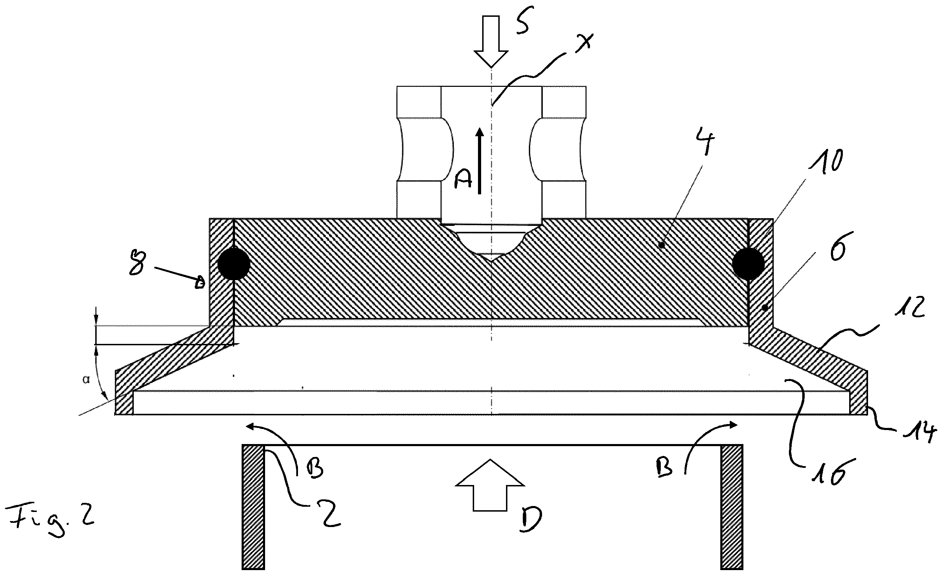

Das schematisch gezeigte Sicherheitsventil weist einen Ventilsitz 2 auf, an welchem ein Ventilteller 4 dichtend zur Anlage kommt. Figur 1 zeigt den geschlossenen Zustand, in dem der Ventilteller 4 an dem Ventilsitz 2 anliegt. Der Ventilteller 4 ist in Richtung der Ventillängsachse x mit einer Vorspannkraft S beaufschlagt. Diese kann beispielsweise von einer hier nicht gezeigten Druckfeder aufgebracht werden. Auf die entgegengesetzte Seite des Ventiltellers 4 wirkt der Druck im Inneren der an den Ventilsitz 2 angrenzenden Leitung. D.h. eine Druckkraft D, welche der Vorspannkraft S entgegenwirkt. Übersteigt die Druckkraft D die Vorspannkraft, öffnet das Ventil in die in Figur 2 gezeigte Position, indem sich der Ventilteller 4 in Richtung des Pfeils A entlang der Ventillängsachse x von dem Ventilsitz 2 abhebt. Am Außenumfang des Ventiltellers 4 ist eine Hubglocke 6 befestigt. Die Hubglocke 6 weist einen ersten Ringabschnitt bzw. eine ringförmige Zylinderwandung 8 auf, welche den Außenumfang des Ventiltellers 4 umgibt bzw. am Außenumfang des Ventiltellers 4 anliegt und über einen Sicherungsring 10 kraft- und formschlüssig mit dem Ventilteller 4 verbunden ist.

Der erste Ringabschnitt 8 erstreckt sich in Richtung der Ventillängsachse x über die dem Ventilsitz 2 zugewandte Oberfläche des Ventiltellers 4 heraus, sodass der erste Ringabschnitt 8 den Ventilsitz 2 in dem in Figur 1 gezeigten geschlossenen Zustand überlappt. Ausgehend von dem Axialende dieses ersten Ringabschnittes 8 erstreckt sich ein Kragen 12 quer zur Ventillängsachse x nach außen. Dabei verläuft der Kragen 12 schräg zur Ventillängsachse x, sodass er insgesamt eine konische Form aufweist. Der Neigungswinkel des Kragens 12, d.h. in den Figuren der gezeigte Winkel a beträgt 10° bis 30° bezogen auf den Radius. D.h. der Neigungswinkel beträgt 60° bis 80° bezogen auf die Ventillängsachse x, d.h. 90° - a. An der umfänglichen Außenkante des Kragens 12 erstreckt sich eine Staudruckkante 14 als ringförmiger Vorsprung bzw. kreiszylindrischer Vorsprung parallel und konzentrisch zu der Ventillängsachse x von dem Kragen 12 weg. Dabei erstreckt sich die Staudrucckante 14 in einer dem Ventilteller 4 abgewandten Richtung von dem Kragen 12 weg, sodass die Staudruckkante 14 ringförmig den Ventilsitz 2 bzw. die an den Ventilsitz 2 angrenzende Rohrleitung umgibt. Dabei ist die Staudruckkante 14 in radialer Richtung von der Wandung des Ventilsitzes 2 beabstandet, sodass im Innenumfang der Staudruckkante 14 unter dem Kragen 12 ein in axialer Richtung geöffneter Raum bzw. Ringraum 16 gebildet wird, in welchem sich beim Öffnen des Ventils das aus dem Ventilsitz 2 austretende Medium sammeln und beruhigen kann. So entsteht in dem Raum 16 ein Staudruck, welcher parallel zu der Druckkraft D auf den Kragen 12 wirkt und so die Öffnungsbewegung des Ventiltellers 4 unterstützt.

Figur 2 zeigt den geöffneten Zustand, in welchem der Ventilteller 4 von dem Ventilsitz 2 beabstandet ist. Wie durch die Pfeile B angedeutet, strömt in diesem Zustand das Medium durch den Ventilsitz 2 zwischen dem Ventilsitz 2 und dem Kragen 12 mit der anschließenden Staudruckkante 14 aus. Die Staudruckkante 14 ist im geöffneten Zustand des Ventils in Richtung der Ventillängsachse x von dem Axialende des Ventilsitzes 2 beabstandet. Unterhalb des Kragens 12 findet in dem Raum 16 eine Beruhigung und die Ausbildung eines Staudruckes statt, welcher die Öffnungsbewegung unterstützt bzw. das Offenhalten des Ventils unterstützt, bis die Druckkraft D wieder kleiner als die Vorspannkraft S ist und das Ventil schließt. Dies unterstützt die Öffnungsbewegung des Ventils insbesondere in ihrer Anfangsphase, wenn der Ventilteller sich noch nicht in der vollständig geöffneten Position befindet.

### Bezugszeichenliste

- 2: Ventilsitz
- 4: Ventilteller
- 6: Hubglocke
- 8: erster Ringabschnitt, Zylinderwandung
- 10: Sicherungsring
- 12: Kragen
- 14: Staudruckkante
- 16: Raum
- S: Vorspannkraft
- D: Druckkraft
- A: Bewegungsrichtung
- B: Strömungsrichtung
- x: Ventillängsachse
- a: Winkel

## Patentansprüche

1. Sicherheitsventil mit einem ringförmigen Ventilsitz (2) und einem durch eine Vorspannkraft (S) an dem Ventilsitz (2) in Anlage gehaltenen und entlang einer Ventillängsachse (x) beweglichen Ventilteller (4), welcher an seinem Außenumfang eine den Ventilsitz 82) umgebende Hubglocke (6) aufweist,
**dadurch gekennzeichnet, dass**
die Hubglocke (6) einen den Ventilsitz (2) umgebenden Kragen (12) aufweist, welcher sich zu der Ventillängsachse (x) in einem Winkel (a) zwischen 60° und 80° nach außen erstreckt, und dass der Kragen (12) am Außenumfang eine ringförmige, sich quer zu dem Kragen (12) erstreckende Staudruckkante (14) aufweist.

2. Sicherheitsventil nach Anspruch 1, **dadurch gekennzeichnet, dass** sich die Staudruckkante (14) parallel und vorzugsweise konzentrisch zu der Ventillängsachse (x) erstreckt.

3. Sicherheitsventil nach Anspruch 1 oder 2, **dadurch gekennzeichnet, dass** zumindest in einem geschlossenen Zustand Sicherheitsventils die Staudruckkante (14) den Ventilsitz (2) radial beabstandet umgibt.

4. Sicherheitsventil nach einem der vorangehenden Ansprüche, **dadurch gekennzeichnet, dass** der Kragen (12) und die Staudruckkante (14) derart dimensioniert sind, dass im geöffneten Zustand des Sicherheitsventils ein freies Ende der Staudruckkante (14) von dem Ventilsitz (2) axial in Richtung der Ventillängsachse beabstandet ist.

5. Sicherheitsventil nach einem der vorangehenden Ansprüche, **dadurch gekennzeichnet, dass** die Hubglocke (6) am Außenumfang des Ventiltellers (4) fixiert ist.

6. Sicherheitsventil nach einem der vorangehenden Ansprüche, **dadurch gekennzeichnet, dass** die Hubglocke (6) einen ersten Ringabschnitt (8) aufweist, welcher sich ausgehend von dem Ventilteller (4) erstreckt und von dessen dem Ventilteller (4) beabstandeten Axialende ausgehend sich der Kragen (12) nach außen erstreckt.

7. Sicherheitsventil nach Anspruch 6, **dadurch gekennzeichnet, dass** sich der erste Ringabschnitt (8) parallel und vorzugsweise konzentrisch zu der Ventillängsachse (x) erstreckt.

8. Sicherheitsventil nach Anspruch 6 oder 7, **dadurch gekennzeichnet, dass** der erste Ringabschnitt (8) den Ventilsitz (2) außenumfänglich umgibt.

9. Sicherheitsventil nach einem der Ansprüche 6 bis 8, **dadurch gekennzeichnet, dass** der erste Ringabschnitt (8) derart dimensioniert ist, dass im vollständig geöffneten Zustand des Sicherheitsventils das Axialende in Richtung der Ventillängsachse (x) von dem Ventilsitz (2) beabstandet ist.

10. Sicherheitsventil nach einem der vorangehenden Ansprüche, **dadurch gekennzeichnet, dass** der Kragen (12) in seiner Erstreckungsrichtung nach außen zumindest an seiner dem Ventilsitz (2) zugewandten Unterseite gerade ausgebildet ist.

11. Sicherheitsventil nach einem der vorangehenden Ansprüche, **dadurch gekennzeichnet, dass** sich die Staudruckkante (14) gewinkelt an den Kragen (12) anschließt.

12. Sicherheitsventil nach einem der vorangehenden Ansprüche, **dadurch gekennzeichnet, dass** der Kragen (12) sich gewinkelt an den ersten Ringabschnitt (8) anschließt.

13. Sicherheitsventil nach einem der vorangehenden Ansprüche, **dadurch gekennzeichnet, dass** die Hubglocke (6) von einer geschlossenen Wandung gebildet ist.

14. Sicherheitsventil nach einem der vorangehenden Ansprüche, **dadurch gekennzeichnet, dass** der Ventilteller (4) durch zumindest eine Feder mit der Vorspannkraft (S) beaufschlagt ist.

## Geänderte Patentansprüche

### Geänderte Patentansprüche gemäss Regel 137(2) EPÜ.

1. Sicherheitsventil mit einem ringförmigen Ventilsitz (2) und einem durch eine Vorspannkraft (S) an dem Ventilsitz (2) in Anlage gehaltenen und entlang einer Ventillängsachse (x) beweglichen Ventilteller (4), welcher an seinem Außenumfang eine den Ventilsitz 82) umgebende Hubglocke (6) aufweist,
**dadurch gekennzeichnet, dass**
die Hubglocke (6) einen den Ventilsitz (2) umgebenden Kragen (12) aufweist, welcher sich zu der Ventillängsachse (x) in einem Winkel zwischen 60° und 80° nach außen erstreckt,
die Hubglocke (6) einen ersten Ringabschnitt (8) aufweist, welcher sich ausgehend von dem Ventilteller (4) erstreckt und von dessen dem Ventilteller (4) beabstandeten Axialende ausgehend sich der Kragen (12) nach außen erstreckt, so dass der Kragen (12) insgesamt axial versetzt zu dem Ventilteller (4) angeordnet ist, und dass der Kragen (12) am Außenumfang eine ringförmige, sich quer zu dem Kragen (12) erstreckende Staudruckkante (14) aufweist.

2. Sicherheitsventil nach Anspruch 1, **dadurch gekennzeichnet, dass** sich die Staudruckkante (14) parallel und vorzugsweise konzentrisch zu der Ventillängsachse (x) erstreckt.

3. Sicherheitsventil nach Anspruch 1 oder 2, **dadurch gekennzeichnet, dass** zumindest in einem geschlossenen Zustand Sicherheitsventils die Staudruckkante (14) den Ventilsitz (2) radial beabstandet umgibt.

4. Sicherheitsventil nach einem der vorangehenden Ansprüche, **dadurch gekennzeichnet, dass** der Kragen (12) und die Staudrucckante (14) derart dimensioniert sind, dass im geöffneten Zustand des Sicherheitsventils ein freies Ende der Staudruckkante (14) von dem Ventilsitz (2) axial in Richtung der Ventillängsachse beabstandet ist.

5. Sicherheitsventil nach einem der vorangehenden Ansprüche, **dadurch gekennzeichnet, dass** die Hubglocke (6) am Außenumfang des Ventiltellers (4) fixiert ist.

6. Sicherheitsventil nach einem der vorangehenden Ansprüche, **dadurch gekennzeichnet, dass** sich der erste Ringabschnitt (8) parallel und vorzugsweise konzentrisch zu der Ventillängsachse (x) erstreckt.

7. Sicherheitsventil nach einem der vorangehenden Ansprüche, **dadurch gekennzeichnet, dass** der erste Ringabschnitt (8) den Ventilsitz (2) außenumfänglich umgibt.

8. Sicherheitsventil nach einem der vorangehenden Ansprüche, **dadurch gekennzeichnet, dass** der erste Ringabschnitt (8) derart dimensionierf ist, dass im vollständig geöffneten Zustand des Sicherheitsventils das Axialende in Richtung der Ventillängsachse (x) von dem Ventilsitz (2) beabstandet ist.

9. Sicherheitsventil nach einem der vorangehenden Ansprüche, **dadurch gekennzeichnet, dass** der Kragen (12) in seiner Erstreckungsrichtung nach außen zumindest an seiner dem Ventilsitz (2) zugewandten Unterseite gerade ausgebildet ist.

10. Sicherheitsventil nach einem der vorangehenden Ansprüche, **dadurch gekennzeichnet, dass** sich die Staudruckkante (14) gewinkelt an den Kragen (12) anschließt.

11. Sicherheitsventil nach einem der vorangehenden Ansprüche, **dadurch gekennzeichnet, dass** der Kragen (12) sich gewinkelt an den ersten Ringabschnitt (8) anschließt.

12. Sicherheitsventil nach einem der vorangehenden Ansprüche, **dadurch gekennzeichnet, dass** die Hubglocke (6) von einer geschlossenen Wandung gebildet ist.

13. Sicherheitsventil nach einem der vorangehenden Ansprüche, **dadurch gekennzeichnet, dass** der Ventilteller (4) durch zumindest eine Feder mit der Vorspannkraft (S) beaufschlagt ist.
